# EUROPEAN PATENT APPLICATION

(11) **EP 2 648 004 A1**
(43) Date of publication of application: **09.10.2013**
(21) Application number: 12002390.8
(22) Date of filing: 02.04.2012
(51) Int. Cl.: G01Q 30/04, B82Y 35/00, G06F 3/048

(54) **Touch-screen based scanning probe microscopy (SPM)**

(71) Applicant: Cytosurge AG, 8005 Zürich (CH)
(72) Inventor: Gabi, Michael, 8050 Zürich (CH); Behr, Pascal, 8193 Eglisau (CH); Jud, Stephan, 8050 Zürich (CH); Wolf, Johann, 8001 Zürich (CH); Weber, Christian, 8004 Zürich (CH)
(74) Representative: Rentsch Partner AG

(57) **Abstract**

The invention relates to a scanning probe microscopy (SPM) system (1) comprising a sample stage (2) and one or more sample motion stages (4) for actuating the sample stage (2), a SPM probe (5) and one or more probe motion stages (6) for actuating the SPM probe (5) and for performing an SPM scan of a sample (3) arranged on the sample stage (2), and a system controller (11). The system controller (11) includes: an image acquisition module (11.1) configured to collect from an image acquisition device (8) one or more images of the sample (3) carried by the sample stage (2), a touch-screen control module (11.2) configured to display the one or more images of the sample (2) together with one or more tools (14, 15, ...) on a touch-screen (12) and to generate one or more control actions depending on the detection of a gesture of a user touching the touch-screen (12), and a control module (11.3) configured to receive one or more control actions generated by the touch-screen control module (11.2) and to control the SPM system (1) according to the received control actions.

## Description

### FIELD OF THE INVENTION

The present invention relates to a scanning probe microscopy (SPM) system and to a method of controlling a SPM system according to the preamble of the patent claims.

### BACKGROUND ART

SPM (scanning probe microscopy) finds more and more acceptance in diagnostic applications, such as in biology or in medicine. An SPM system includes a physical probe that scans the surface of a sample or specimen. An image of the surface is recorded by mechanically moving the probe in a raster scan line by line and by recording the interaction between the probe and the surface as a function of the position of the probe. Various types of scanning probe microscopy are known, such as AFM (atomic force microscopy), NSOM (near-field scanning optical microscopy), STM (scanning tunnelling microscopy), SICM (Scanning ion conductance microscopy), SECM (scanning electrochemical microscopy) etc. In SPM, a flexible cantilever having a tip configured to follow the surface is the most common sensor. When the tip is moved in proximity to the investigated object, the interaction between the tip and the surface is detected by sensors such as a photodiode which detects a laser beam deflected on the cantilever, a piezoelectric element which detects the deflection of the cantilever, an ampère meter which detects changes of electrical or ion conductivity, a hall sensor which measures changes of magnetic flux, etc. SPM systems operate on a scale from millimetres down to nanometers and can image clusters of individual atoms and molecules. STM systems rely on the electrical conductivity of the sample, which has to be electrically conductive to some degree, whereas AFM systems can also be used for scanning non-conductors such as macromolecules and biological materials.

The performance of a SPM system is limited by the accuracy of the mechanical components used to move the tip and to measure its position. In an embodiment, the SPM system includes a light microscope having a sample stage configured to carry a sample. Using sample motion stages such as micrometer screws, the field of interest of the sample is moved into the field of view of the light microscope, for example manually or motorized using a joystick or a GUI (Graphical User Interface). Thereafter, the SPM probe, which is arranged e.g. in the centre of the field of view of the light microscope, is activated and an area of interest of the sample is scanned, wherein movement of the SPM probe is performed using probe motion stages such as piezoelectric elements.

US 2011/0242307 discloses a touch screen user interface for imaging devices such as microscopy systems, wherein the microscope has motion stages for holding the specimen and where the touch screen user interface is connected to a controller which receives commands from the touch screen user interface and converts them into commands which drive the motion. The user can enter commands and the motion stages respond to those commands as if the user had moved the specimen directly rather than touching an image of the specimen on a touch screen. On the monitor, a graphic overlay indicates the position at which a laser beam will initially impinge upon the specimen. To alter this position, the user touches the screen and drags a finger across the screen. The controller detects the motion of the user's finger and directs the motion stages to move the specimen with respect to the field of view of the camera. The controller can interpret some motions relating to Z-axis motion, to move the specimen in 3D, or to move the cursor or other screen graphics.

In "Mapping real-time images of high-speed AFM using multitouch control", D M Carberry et al., Nanotechnology 20 (2009), a multitouch screen includes on the left side a scan window, which displays the scan area currently being imaged. On the right is a Max Scan Area, which takes the images and tiles them as the scan window is panned across the sample surface. When the user drags their fingers across the screen, they pan the scan window across the image surface, wherein any trajectory can be followed. By placing two fingers within the Max Scan Area, the user is able to zoom in and out of the Max Scan Area. Using three fingers, the user is allowed to move the Max Scan Area window around when zoomed-in on a specific region.

US 2011/0013010 discloses a microscope system in which various optical members are electrically-driven by electric driving devices such as motors. A controller performs an operation for controlling operation of each motorized unit configuring a microscope system. The controller comprises a touch panel and a controlling unit. The touch panel accepts input made with an external physical contact and has a display function. The controlling unit sets a display area as a functional area by assigning an image for operating the motorized unit to the display area and generates a control instruction signal in accordance with a contact operation performed for the motorized unit corresponding to the functional area upon detection of an input made in the functional area. The control instruction signal is transmitted to an external device controlling an operation of the motorized unit.

### DISCLOSURE OF THE INVENTION

It is an object of the present invention to provide a controller and a control method for controlling an SPM system, which do not have at least some of the disadvantages in the prior art. In particular it is an object of the present invention to provide a controller and a control method for controlling an SPM system, which provide for simple operation of the SPM system, such that the SPM system can also be operated by persons not having expert knowledge in the field of SPM systems.

According to the present invention, these objects are achieved through the features of the independent claims. In addition, further advantageous embodiments follow from the dependent claims and the description.

According to the present invention, a scanning probe microscopy (SPM) system comprises a sample stage and one or more sample motion stages for actuating the sample stage. The SPM system comprises a SPM probe and one or more probe motion stages for actuating the SPM probe and for performing an SPM scan of a sample arranged on the sample stage. The SPM system comprises a system controller, wherein the system controller includes: an image acquisition module configured to collect from an image acquisition device one or more images of the sample carried by the sample stage, a touch-screen control module configured to display the one or more images of the sample together with one or more tools on a touch-screen and to generate one or more control actions depending on the detection of a gesture of a user touching the touch-screen, and a control module configured to receive one or more control actions generated by the touch-screen control module and to control the SPM system according to the received control actions. The tools and the images of the sample are displayed on the touch-screen such that a user easily can define control actions for the SPM system to be performed.

In an embodiment, the one or more tools are displayed on the touch-screen as an overlay image on the one or more images of the sample. Through the overlay of the tools with the image of the sample, the location of control actions to be performed can be defined precisely.

In an embodiment, at least one of the one or more tools displayed on the touch-screen includes a dedicated area configured to be touched and dragged by a user. Through the dedicated area of the tool, the user can easily move the tool to desired locations of the image of the sample.

In an embodiment, at least one of the one or more tools displayed on the touch-screen includes a crosshair configured to define a target location on the sample. Through the crosshair of the tool, precision is increased in the definition of a location in the image of the sample.

In an embodiment, at least one of the one or more tools displayed on the touch-screen includes a scan area configured to define a SPM scan area on the sample. Through the scan area of the tool, the user visually can inspect the desired area and can precisely define the area for a SPM scan.

In an embodiment, at least one of the one or more tools displayed on the touch-screen includes a volume indicator configured to define a volume of a liquid to be applied to the sample and/or to be withdrawn from the sample. Through the volume indicator, the volume to be applied or withdrawn form the sample can be precisely defined, in particular together with a precise location in the image of the sample.

In an embodiment, at least one of the one or more tools displayed on the touch-screen are configured to define at least a first location and a second location on the sample, on another sample, or on another item such as an analysis device, in particular together with a trajectory between the first location and the second location. Through the definition of a first and a second location, extended manipulations such as picking up and placing of objects is provided with a high precision. In a variant several location along a trajectory are defined. Accordingly, several manipulations along the trajectory are provided, such performing SPM scans, wherein the user is able to do other work during the SPM scans.

In an embodiment, at least one of the one or more tools displayed on the touch-screen includes visual tags configured to display specific locations of the sample together with specific information. Trough the visual tags, a history book of manipulations performed at locations in the image of the sample is available for later review.

In an embodiment, the control actions define on or more of the following: actuating the sample motion stages such that images of a different area of the sample are collected by the image acquisition module, actuating the probe motion stages such that the SPM probe is brought into connection with the sample and/or that the SPM probe is taken away from the sample, actuating the probe motion stages such that an SPM scan of an area of the sample is performed, actuating a pressure controller connected with a hollow SPM probe to pick up from the sample and/or to drop an object on the sample, on another sample, or on another item such as an analysis device, in particular between a first location and a second location, actuating a pressure controller connected with a hollow SPM probe to inject a specified volume of a liquid on the sample and/or to extract a specified volume of a liquid from the sample. Through the control actions, a SPM system is operated and a user does not need to have expert knowledge in SPM technology.

In addition to a SPM system, the invention relates to a method of controlling a SPM system. The SPM system comprises a sample stage and one or more sample motion stages for actuating the sample stage. The SPM system comprises a SPM probe and one or more probe motion stages for actuating the SPM probe and for performing an SPM scan of a sample arranged on the sample stage. The method for controlling the SPM system comprises: collecting from an image acquisition device one or more images of the sample carried by the sample stage, displaying the one or more images of the sample together with one or more tools on a touch-screen and generating one or more control actions depending on the detection of a gesture of a user touching the touch-screen, and controlling the SPM system according to the generated control actions.

In a variant, one or more tools are displayed on the touch-screen as an overlay image of the one or more images of the sample.

In a variant, a tool displayed on the touch-screen includes a dedicated area configured to be touched and dragged by a user.

In a variant, a tool displayed on the touch-screen includes one or more of: a crosshair configured to define a target location on the sample, a scan area configured to define a SPM scan area on the sample, a volume indicator configured to define a volume of a liquid to be applied to the sample and/or to be withdrawn from the sample, and visual tags configured to display specific locations of the sample together with specific information.

In a variant, control actions define on or more of the following: actuating the sample motion stages such that images of a different area of the sample are collected by the image acquisition module, actuating the probe motion stages such that the SPM probe is brought into connection with the sample and/or that the SPM probe is taken away from the sample, actuating the probe motion stages such that an SPM scan of an area of the sample is performed, actuating a pressure controller connected with a hollow SPM probe to pick up from the sample and/or to drop an object on the sample, on another sample, or on another item such as an analysis device, in particular between a first location and a second location, actuating a pressure controller connected with a hollow SPM probe to inject a specified volume of a liquid on the sample and/or to extract a specified volume of a liquid from the sample.

In addition to a SPM system and a method for controlling an SPM system, the invention relates to a computer program product comprising computer program code means for controlling one or more processors of a system controller of a scanning probe microscopy (SPM) system. The computer program product is configured to direct the system controller to: collect from an image acquisition device one or more images of the sample carried by the sample stage, display the one or more images of the sample together with one or more tools on a touch-screen and generating one or more control actions depending on the detection of a gesture of a user touching the touch-screen, and control the SPM system according to the generated control actions.

### BRIEF DESCRIPTION OF THE DRAWINGS

The herein described invention will be more fully understood from the detailed description given herein below and the accompanying drawings which should not be considered limiting to the invention described in the appended claims. The drawings are showing:
- Fig. 1: schematically a scanning probe microscopy (SPM) system of an inverted type;
- Fig. 2: schematically a scanning probe microscopy (SPM) system of a top view type;
- Fig. 3: schematically an aiming tool;
- Fig. 4: schematically an aiming tool at a first position and at a second position;
- Fig. 5: schematically a scan tool;
- Fig. 6: schematically a scan tool during a SPM scan;
- Fig. 7: schematically an injection tool;
- Fig. 8: schematically a zooming gesture;
- Fig. 9: schematically a focus gesture;
- Fig. 10: schematically an effect of a tagging tool; and
- Fig. 11: schematically a physical input tool.

### MODE(S) FOR CARRYING OUT THE INVENTION

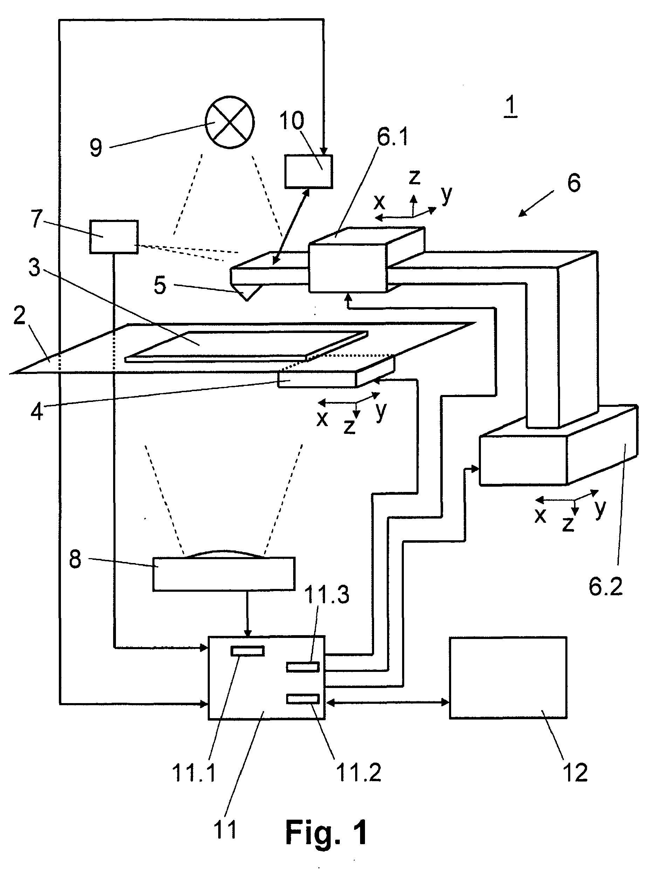

Figure 1 shows schematically a scanning probe microscopy (SPM) system 1. The SPM system may relate to an atomic force microscopy (AFM) system, to a scanning tunnelling microscopy (STM) system, to a near-field scanning optical microscopy (NSOM) system, to a scanning ion-conductance microscopy (SICM) system, to a scanning electrochemical microscopy (SECM), or to another SPM system.

The SPM system 1 according to Figure 1 includes a sample stage 2 configured to carry a sample 3. The sample 3 is analysed using the SPM system and may include any substances or materials. For example, the sample 3 may include a transparent microscopy slide having a glass surface and having arranged thereon sample material, e.g. a polymeric material or any other material. In an embodiment, the sample 3 includes an opaque surface, such as the surface of a metallic material, of a ceramic material, of thick tissue slices or of any other material. In a variant, the sample stage 2 includes one or more fasteners, such as flexible arms, configured to fasten the sample 3 to the sample stage 2.

As shown schematically in Figure 1, the SPM system 1 includes sample motion stages 4 configured to move the sample stage 2 in particular in x-direction, in y-direction, and/or in z-direction. The sample motion stages 4 may include any actuators, such as high precision electrical motors and motorized micrometer screws, configured to move and/or to turn the sample stage 2 in any direction. As such, the sample motion stages 4 include a fixed part, which is connected to a fixed location such as a support frame of the SPM system 1, and a movable part, which is connected to the sample stage 2. In particular, the sample motion stages 4 include one or more interfaces for receiving one or more control signals. Moreover, the sample motion stages 4 include one or more actuators configured to move the sample stage 2 according to the one or more control signals in a range of up to, for example, 1mm...10mm or more in any direction. Accordingly, the sample motion stages are configured to use a control signal to move the sample stage 2, and therefore the sample 3 carried by the sample stage 2, in an area of up to, for example, 1mm...10mm x 1mm...10mm, or in a volume of up to, for example, 1mm...10mm x 1mm...10mm x 1mm...10mm.

The SPM system 1 according to Figure 1 includes an SPM probe 5, which includes, for example, a cantilever, a fluid tip, a glass capillary, or any other SPM probe configured to scan the surface of the sample 3 carried by the sample stage 2. The SPM probe 5 is attached to probe motion stages 6 configured to move the SPM probe in particular in x-direction, in y-direction, and/or in z-direction. The probe motion stages 6 may include any actuators, such as piezoelectric actuators, configured to move and/or to turn the SPM probe 5 in any direction. As such, the probe motion stages 6 include a fixed part, which is connected to a fixed location such as a support of the SPM system 1, and a movable part, which is connected to the sample stage 2. In a variant, the fixed part of the probe motion stages 6 is connected to the sample stage 2. In particular, the probe motion stages 6 include one or more interfaces for receiving one or more control signals. Moreover, the probe motion stages 6 include one or more actuators configured to move the SPM probe 6 according to the one or more control signals in a range of up to, for example, x=1µm-100µm, y=1µm-100µm, z=1µm-10µm or more in any direction. As schematically shown in Figure 1, the SPM probe motion stages 6 may include first probe motion stages 6.1 and second probe motions stages 6.2. In a variant, the first probe motion stages 6.1 provide for large and coarse motion of the SPM probe 5, e.g. in the range of up to 1mm...10mm or more, wherein the second probe motion stages 6.2 provide for small and precise motion of the SPM probe 5, e.g. in the range of 0.1nm-100µm.

The SPM system 1 according to Figure 1 includes a SPM feedback acquisition device 7 configured to detect surface interactions of the SPM probe 5 with the sample 3. Hence, SPM images are acquired according to an AFM technique, a STM technique, a NSOM technique, a SICM technique or any other SPM technique. As such, the SPM images are acquired by actuating the one or more probe motion actuators 6, wherein the SPM probe 5 is brought into interaction with the surface of the sample 3, and wherein a signal corresponding to the interaction with the surface of the sample 3 is acquired within an area of the surface of the sample 3. In particular, the SPM image includes a three-dimensional representation of an area of the surface of the sample 3. In particular, the data of the a first and a second dimension includes a location defined by an x-coordinate and a y-coordinate of the sample 3, whereas the data of the third dimension indudes a height information, a conductivity, a magnetic field strength, a temperature, etc. according to the SPM technique involved, such as AFM, STM, NSOM, SICM, or another technique. For example, the SPM image represents a 2D area of a length of 1µm, 50µm, or 100µm and a width of 1µm, 50µm, or 100µm of the surface of the sample 3.

The SPM system 1 according to Figure 1 includes an image acquisition device 8, such as a video camera, configured to acquire images of the sample 3. In an embodiment, the sample stage 2 carrying the sample 3 and the image acquisition device 8 are included in a light microscope, which is e.g. of a normal or of an inverted type, wherein a video camera attached to the light microscope acquires images of the sample 3. In a variant, the image acquisition device 8 includes an interferometer, such as a 3D interferometer, or another device configured to acquire images of the sample 3. In particular, the image acquisition device 8 is arranged in a fixed distance to the fixed part of the sample motion stages 4. When the sample motion stages 4 are actuated, the sample 3 carried by the sample stage 2 moves in x-direction, y-direction, and/or z-direction. Through appropriate control signals transmitted to the one or more interfaces of the sample motion stages 4, the sample 3 carried by the sample stage 2 moves into or inside the field of view of the image acquisition device 8, as well as into or inside its focal plane. As shown schematically in Figure 1, the SPM system 1 may include a light source 9, such as a normal lamp, a laser, an excitation light for fluorescence microscopy, or another light source. In particular, the light source 9 illuminates the sample 3 in a manner such that images acquired by the image acquisition device 8 are clearly illuminated.

In a variant, the SPM system 1 according to Figure 1 includes a pressure controller 10 configured to control the pressure inside a hollow SPM probe 5 such as a hollow cantilever. In a variant, the SPM system 1 is configured to use the pressure controller 10 to pick up one or more items of the sample 3 carried by the sample stage 2. In a variant, one or more picked up items of the sample 3 are moved, by actuating the probe motions stages, to a different position of the sample 3 and then arranged on the sample 3. In particular, the pressure controller 10 is configured to increase or decrease the pressure in the SPM probe 5 as required, such that items of the sample 3 can be picked up from the sample 3 at a first location, for example, and moved to and arranged on the sample 3 at a second location, for example. In a variant, the pressure controller 10 is configured to inject a volume of a liquid through the SPM probe 5 onto the sample 3 or to extract a volume of a liquid through the SPM probe 5 from the sample 5.

In a variant, the SPM system 1 is configured such that an item from the sample 3 carried by the sample stage 2 is picked up and transferred to another sample. In an embodiment, the other sample is carried by the sample stage 2 as well. In another embodiment, the other sample is carried by another sample stage or by any other device. In an embodiment, transferring the item from the sample 3 to another sample is performed by actuating the sample motion stages 4 and, if applicable, corresponding motion stages of the sample stage of the other sample. In an embodiment, transferring the item from the sample 3 to another sample is performed by actuating the probe motion stages 6, hence by moving the SPM probe 5. In a further embodiment, transferring the item from the sample 3 to another sample is performed by a combination of actuating the sample motion stages 4 and, if applicable, further motion stages of another sample stage, and by actuating the probe motion stages 6.

In a variant, the SPM system 1 is configured such that an item from the sample 3 carried by the sample stage 2 is picked up and transferred to an analysis device, such as a mass spectrometer, a MALDI-TOF, a spectrometer, a single cell PCR, or another analysis device. In an embodiment, transferring the item from the sample 3 to the analysis device is performed by moving the sample stage 2 and the analysis device, by moving the SPM probe 5, or by a combination of moving the sample stage 2 and the analysis device as well as the SPM probe 5.

The image acquisition device 8 of the SPM system 1 schematically shown in Figure 1 is adapted to acquire images of the sample 3 carried by the sample stage 2, wherein focus and field of view are adjustable through one or more control signals controlling the sample motion stages 4. The SPM probe 6 is arranged within the field of view of the image acquisition device 8, wherein the SPM probe 6 is configured to perform a SPM scan in an area of the field of view of the image acquisition device 8, and wherein a SPM feedback acquisition device 7 is configured to acquire SPM images of the surface of the sample 3 carried by the sample stage2. The images acquired by the image acquisition device 8 provide for an optical feedback of the sample 3 and the SPM probe 5. In case the SPM probe 5 is not touching the sample 2, i.e. when the SPM probe or the sample stage 2 carrying the sample 3 are moved in x-direction and/or y-direction, normally only the sample 3 or on the SPM probe 5 are in the focus of the image acquisition device 8. In case the SPM probe 5 is touching the sample 2, both the sample 3 and the SPM probe 5 may be in the focus of the image acquisition device 8.

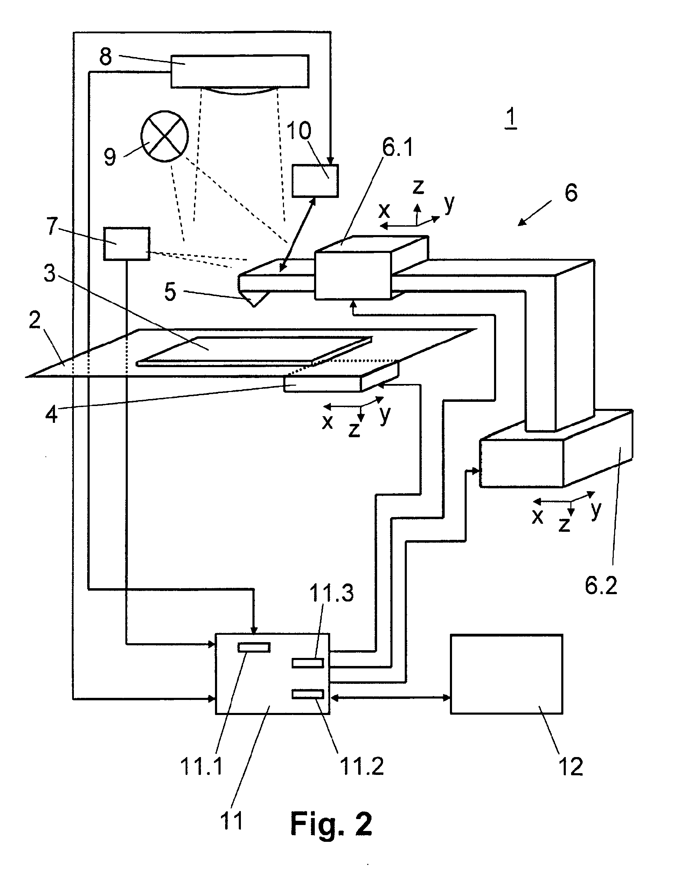

The SPM system 1 schematically shown in Figure 1 is of an inverted type, i.e. the sample 3 carried by the sample stage 2 is illuminated from one side of the sample 3 and images of the sample 3 are acquired from the other side of the sample 3. Figure 2 shows schematically a SPM system 1 of a top view type, i.e. the sample 3 carried by the sample stage 2 is illuminated from one side of the sample 2 and images of the sample 3 are acquired from the same side of the sample 3.

In a variant, the image acquisition device 8 includes acquisition motion stages configured to move the image acquisition device in a z-direction, in a x-direction, and/or in a y-direction. In particular, the motion in a z-direction provides for focusing of the sample 3 carried by the sample stage 2. In a variant, the image acquisition device 8 includes a video camera configured to acquire a video stream.

The SPM system 1 according to Figure 1 includes a system controller 11. In an embodiment, the system controller 11 comprises a computer system designed to run one or more programmed software modules configured to provide functions described in the following paragraphs. The computer system comprises a Windows operating system developed by Microsoft Corp., a Linux operating system developed by a developer and user community, or any other operating system. The computer system includes one or more microprocessors, such as a microprocessor developed by Intel Corp., a microprocessor developed by Advanced Micro Devices Inc., or any other microprocessor. The computer system includes one or more interfaces designed to connect peripheral devices, such as an USB interface (USB: Universal Serial Bus), an Ethernet interface, or any other interface. In a variant, the system controller 11 includes functional modules implemented by way of programmed software modules, comprising computer code stored on a computer-readable medium. In a variant, the system controller 11 includes functional modules implemented by way of hardware components. In a further variant, the system controller 11 includes functional modules implemented by a combination of software and/or hardware.

As shown schematically in the Figures, the system controller 11 includes an image acquisition module 11.1 configured to collect from the image acquisition device 8 of the SPM system 1 one or more images of the sample 3 carried by the sample stage 2. In a variant, the image acquisition module 11.1 includes a programmed software module. As described earlier, the one or more images may include a video stream. In order to collect images from the image acquisition device 8, for example USB interfaces and an USB cable are arranged between the image acquisition device 8 and the system controller 11.

As shown schematically in the Figures, the system controller 11 includes an touch-screen control module 11.2 configured to display the one or more images of the sample 3 on a touch-screen 12 and to receive one or more control actions generated by a user touching the one or more images displayed on the touch-screen 12. In a variant, the touch-screen control module 11.2 includes a programmed software module. In order to display images on the touch screen, for example video interfaces and a video cable are arranged between the system controller 11 and the touch-screen 12. In order to collect one or more control actions generated by user touching the one or more images displayed on the touch screen 12, for example USB interfaces and an USB cable are arranged between the system controller 10 and the touch-screen 12.

As shown schematically in the Figures, the system controller 11 includes a control module 11.3 configured to control the one or more sample motion stages 4 and to control the one or more probe motion stages 6 using the one or more collected control actions. In a variant, the control module 11.3 includes a programmed software module. In order to control the one or more sample motion stages, for example USB interfaces and an USB cable are arranged between the system controller 10 and the sample motion stages 4. In order to control the one or more probe motion stages 6, for example USB interfaces and an USB cable are arranged between the system controller 10 and the probe motion stages 6.

In a variant, a control action includes touching with a finger of a user an image displayed on the touch-screen 12 and moving the finger of the user along a trajectory on the touch-screen 12. The control action, which is collected accordingly by the touch-screen module, is analyzed, wherein the control module 11.3 controls the sample motion stages 4 in such a manner that the sample stage 2 carrying the sample 3 is moved according to the trajectory defined by the movement of the finger on the touch-screen. When moving the sample stage 2 carrying the sample 3, images of the sample 3 are collected by the image acquisition module 11.1 and displayed on the touch-screen 12 by the touch-screen control module 11.2. Accordingly, a field of interest of the sample 3 can be moved easily and conveniently to a desired position, wherein at the desired position a SPM scan can be performed using the SPM probe 5. In a variant, one or more SPM images of an area of the sample 3 are scanned, wherein data of the scanned SPM images are displayed on the touch-screen 12 together with the images of the sample 3, which were acquired by the image acquisition device 8. Hence, the image of the sample 3 is acquired in a first step as an image with a resolution of a light microscope, for example, and in a second step areas of interest of the sample 3 are scanned with a resolution of the SPM system, wherein a user can select or define areas of the sample 3 very conveniently and easily.

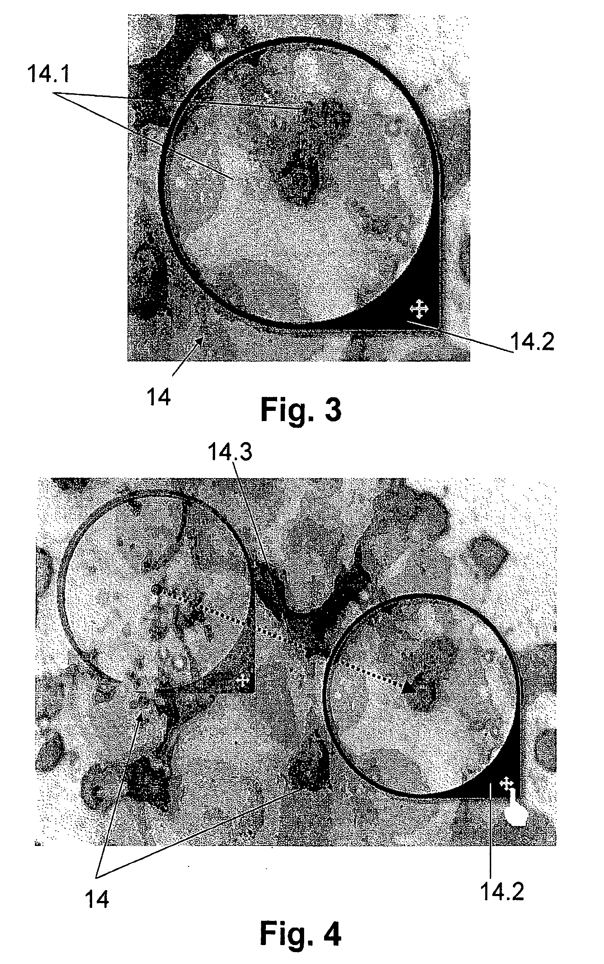

In a variant, the touch-screen controller 11.2 is configured to provide an aiming tool 14. Figure 3 shows schematically an aiming tool 14 displayed on the touch-screen 12 of the SPM system 1. In particular, the aiming tool 14 is displayed over the images of the sample 3 displayed on the touch-screen 12. The aiming tool 14 includes a crosshair 14.1 that defines a position to be used and a dedicated area 14.2 which enables the user to move the aiming tool 14 over the surface of the image of the sample 3 displayed on the touch-screen 12 using touch gestures, such as pointing with a finger on the dedicated area 14.1 and dragging the dedicated area 14.1 together with the aiming tool and the crosshair 14.1 to a desired location of the sample 3 displayed on the touch-screen 12. In a variant, the dedicated area 14.2 is configured to magnify the aiming area comprising the crosshair 14, for example by touching the dedicated area 14.1 with a first finger, by touching the touch-screen 12 at a location distant from the dedicated are 14.1 with a second finger, and by increasing or decreasing the distance between the first finger and the second finger in order to increase or decrease the magnification of the aiming area comprising the crosshair 14.

Figure 4 shows schematically moving the aiming tool 14 over the sample 3 or the substrate from a first position to a second position. In Figure 4 the aiming tool 14 is shown in a transparent manner at the first position and in a lucid manner at the second position. The centre of the crosshair 14.1 of the aiming tool 14 has moved along the trajectory 14.3 by touching and dragging the dedicated area 14.2.

In a variant, the touch-screen controller 11.2 is configured to generate a control action after the user has positioned the aiming tool 14, wherein the control action includes the actual position of the aiming tool 14. The control module is configured to use the control action, wherein the SPM probe is precisely positioned at the crosshair 14.1 of the aiming tool. In a variant, the SPM probe is then moved onto the samole 3 at the location of the crosshair 14.1, and then the SPM probe is moved away from the sample 3 thereafter. In a variant, the SPM system 1 includes a force recorder configured to record the forces when the SPM probe approaches and touches the sample 3, or to record the forces required to remove the SPM probe from the sample 3.

In a variant, more than one position can be preselected with the aiming tool 14, wherein several positions are recorded in a work queue. In an embodiment, the SPM system 1 is configured to perform tasks defined according to a work queue autonomously without further user actions. In the following, further tools are described. Accordingly, the work queue is applicable to these further tools as well.

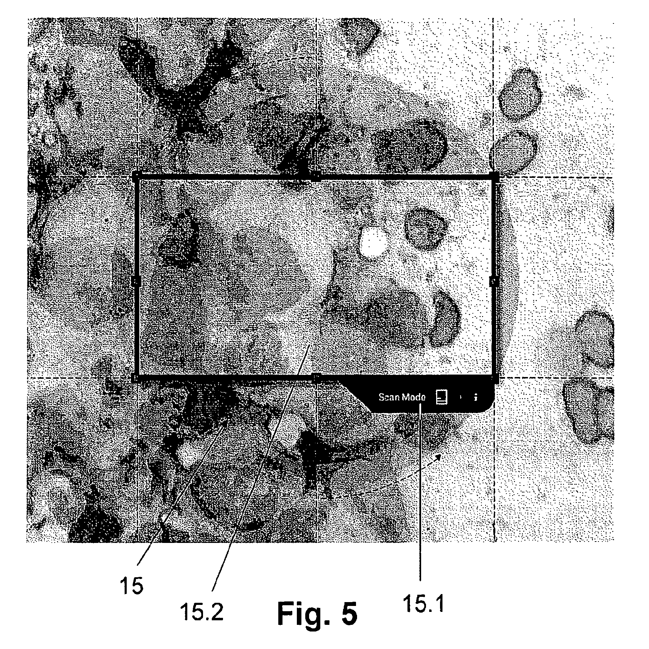

In a variant, the touch-screen controller 11.2 is configured to provide for a scan tool 15. Figure 5 shows schematically a scan tool 15 displayed on the touch-screen 12 of the SPM system 1. The scan tool 15 includes a scan area 15.2 defining an area on the sample 3 to be scanned by a SPM scan. The scan tool 15 includes a dedicated area 15.1 configured to provide scan related operations of the SPM system 1. The dedicated area 15.1 is configured that the area to be scanned can be selected by touching and moving the scan tool over the image of the sample 3, which is similar to the operation provided by the aiming tool 14. Moreover, the dedicated area 15.1 is configured to provide for defining the area to be scanned by resizing the scan tool 15, wherein operations such as pan, resize, rotate, or other operations are provided. Furthermore, the dedicated area 15.1 is configured to provide for starting and stopping a scan operation. The scan is performed using the SPM probe, wherein an SPM image of the area defined by the scan tool 15 are acquired.

After completion of the scan, the acquired SPM image is displayed in the scan area of the scan tool 15. In particular, the acquired SPM image is overlaid onto the image of the sample 3, therefore hiding the image of the sample 3 acquired by the image acquisition device 8 and providing a much higher resolution of the sample 3. In a variant, the overlaid image is transparent such that the underlying image is still visible.

The scan tool 15 may include indicators or information such that a user is informed about remaining scan time, about skipping lines during the scanning operation, additional information such as line-scan data, additional help, or any other indicators or information. Accordingly, a user with little expert knowledge about SPM systems is guided exactly and precisely through the process of acquiring SPM images of a sample 3.

In a variant, as indicated in Figure 5, at the border of the scan tool 15 additional controls are provided. For example, the additional controls include quadratic rectangles as shown in Figure 5, wherein the size of the scan tool 15 is adjusted by touching and dragging the quadratic rectangles of the border of the scan tool 15.

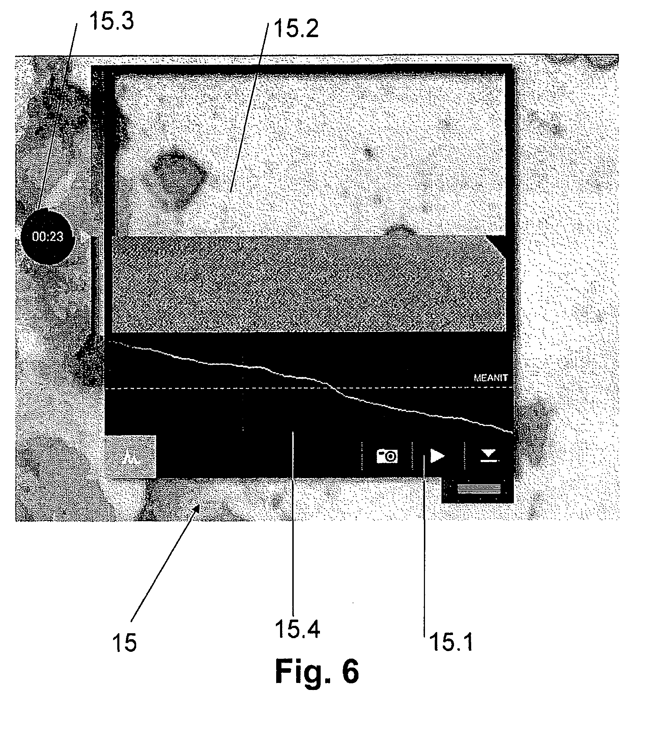

In Figure 6, the scan tool 15 is shown during a SPM scan. The result of the scan is drawn inside the scan tool 15, wherein the image of the underlying sample 3 is hided line by line or wherein the underlying sample 3 is partially visible in case of a transparent overlay. In a variant, the time spent for the scan or the time remaining for performing the scan are indicated by a time indicator 15.3. In a variant, the time indicator 15.3 includes combined line-position tools as shown on the left of the scan tool 15 in Figure 6. In a variant, below the scan area of the scan tool 15, real-time line-scan information 15.4 is displayed. Accordingly, a user with few expertise in the field of SPM systems is guided precisely through the process of performing an SPM scan of a sample 3.

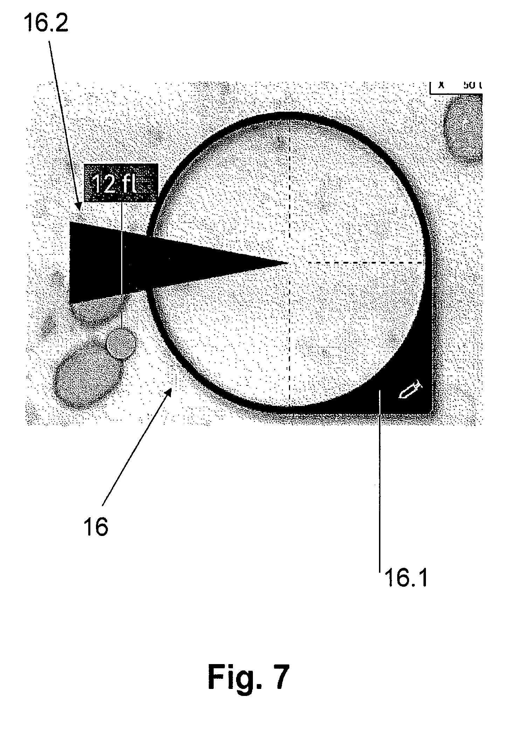

In a variant, the touch-screen controller 11.2 is configured to provide for an injection tool 16. Figure 7 shows schematically an injection tool 16 displayed on the touch-screen 12 of the SPM system 1. The injection tool 16 includes a dedicated area 16.1 for controlling the position and operation of the injection tool 16. The injection tool 16 is overlaid onto the image of the sample 3. After positioning the injection tool 16, the user activates injection of a specified volume by appropriate touch and release of a finger with the touch-screen 12. In a variant, the injection tool 16 includes a volume indicator 16.2 configured to define a volume, for example by dragging a slider. For example, a double-touch starts injection of a certain fluid. Accordingly, the touch-screen control module 11.2 is configured to generate an appropriate control action. In a variant, the SPM system 1 includes an injection controller module configured to collect control actions of the touch-screen module related to fluid injections. The injection control module is further configured to control injection of a fluid through a fluid injector, for example through the pressure controller 10 to a hollow SPM probe 5 of the SPM system 1, as schematically shown in Figure 1 and in Figure 2.

In a variant, the touch-screen controller 11.2 is configured to provide for an extraction tool. The extraction tool operates analogously to the injection tool 16 and provides analogues functionalities, wherein the extraction control module is configured that liquid is sucked from the sample 3 into a fluid extractor connected to a hollow SPM probe 5 of the SPM system 1.

In a variant, the aiming tool 14 is configured to provide the functionality of a pick and place tool. In a first step, the aiming tool 14 is dragged to a first location defining a start point. In a second step, the aiming tool 14 is dragged to a second location defining an end point. The aiming tool 14 is further configured to generate a control action defining the start point and the end point as well as the operation to be performed. In a variant, the operation to be performed is placing an object from the start point to the end point. Accordingly, for example the system controller 11 is configured to receive a control action defining the placement of an object and to control the pressure controller 10 connected to the SPM probe 5 of the SPM system 1.

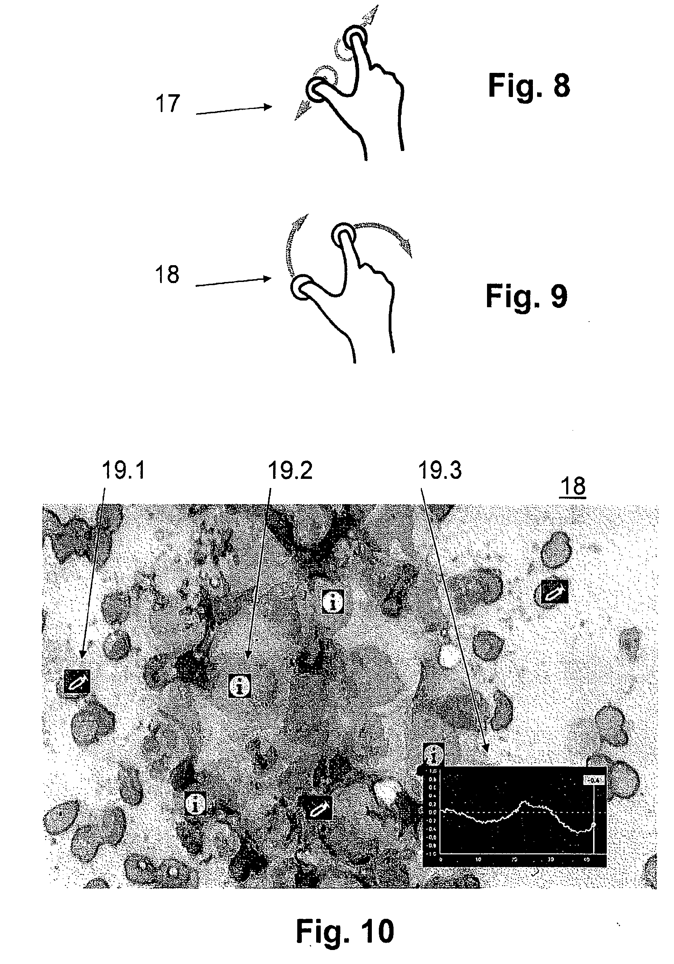

In a variant, the touch-screen controller 11.2 is configured to detect a zooming gesture 17. A zooming gesture 17 is shown schematically in Figure 8. The zooming gesture 17 is defined by placing a first finger and a second finger on the touch-screen 12 and by increasing or decreasing the distance between the fingers. In a variant, the part of the image of the sample 3 displayed on the touch-screen 12 may be zoomed into or out of accordingly. For example the position where the zoom gesture 17 was started is used as the centre for the zoom or magnification action. In order to perform the zoom or magnification action, for example the touch-screen control module 11.2 is configured to generate appropriate control actions, wherein the system controller 11 is configured to perform appropriate actions. In a variant, the zoom or magnification action is performed digitally by a digital image processor. In another variant, the zoom or magnification action is performed by changing a lens or an objective of the image acquisition device.

In a variant, the touch-screen controller 11.2 is configured to detect a focus gesture 18. A focus gesture 18 is shown schematically in Figure 9. The focus gesture 18 is defined by placing a first finger and a second finger on the touch-screen 12 and by rotating the fingers clockwise or counter clockwise. In a variant, the touch-screen control module 11.2 is configured to generate control actions corresponding to the focus gesture 18. Moreover, the system controller 11 is configured to adjust focus appropriately, for example the focus of the image acquisition device 8. In a variant, focus is adjusted by the control module and by adjusting the sample stage 2 in a z-direction, for example.

In a variant, the touch-screen control module 11.2 is configured to provide for a tagging tool 19. Figure 10 shows schematically the effect of the tagging tool 19. Tagging is a system to enhance the presented optical feedback of the sample 3 or a substrate. When many operations are performed on different locations of the sample 3 or the substrate, it is tedious to keep track which operation were conducted on which location and the corresponding results that where obtained. The tagging tool 19 solves this problem by adding visual tags 19.1, 19.2, 19.3 on the optical feedback of the sample 3 or the substrate. These tags are located where the individual results of measurements have been gathered. The tags can be expanded through e.g. a click gesture to see the corresponding results and data, such as shown in Figure 9 item 19.3. Moving the substrate by dragging gestures also moves the tags on the touch-screen 12 as if they would be attached on the corresponding object or location. The tagging tool 19 therefore relieves the user from manually associating the obtained measurements and information to their physical location on the substrate as they are continuously overlaid on top of each other. In a variant, the touch-screen control module is configured such that the information gathered by the tagging tool can also be saved to a suitable file format for export and subsequent offline analysis.

In a variant, the touch-screen control module 11.2 is configured to display results that were gathered based on a part of the sample 3 in-place on the graphical representation presented on the touch-screen 12. For example, a sticky meta-info window showing spectroscopy results of a cell is added at the location of the cell, wherein when the cell is moved by a dragging gesture, the sticky meta-window remains attached on the cell on the image displayed on the touch-screen 12. In case high-resolution topography information of an SPM scan has been gathered, such information is overlaid on the corresponding area, wherein when the substrate is moved, the overlaid moves as well.

In a variant, the aiming tool 14 is configured to provide the functionality of a deposition tool. Using the aiming tool 14, a target position is defined. In a variant, the user is prompted to enter a set of parameters thereafter. In a further variant, the user is prompted to define lines or other structures. In another variant, the user is prompted to acknowledge that deposition shall be started. The touch-screen control module 11.2 is configured to generate appropriate control actions, wherein the system controller 11 is configured to perform appropriate actions, in particular by actuating the SPM probe 5, the sample motion stages 4 and/or the probe motion stages 6 , wherein deposition of material and/or liquid along a defined trajectory is performed. In a variant, the trajectory is continuously defined by a user touching and dragging on the touch-screen 12 during deposition of the material and/or liquid.

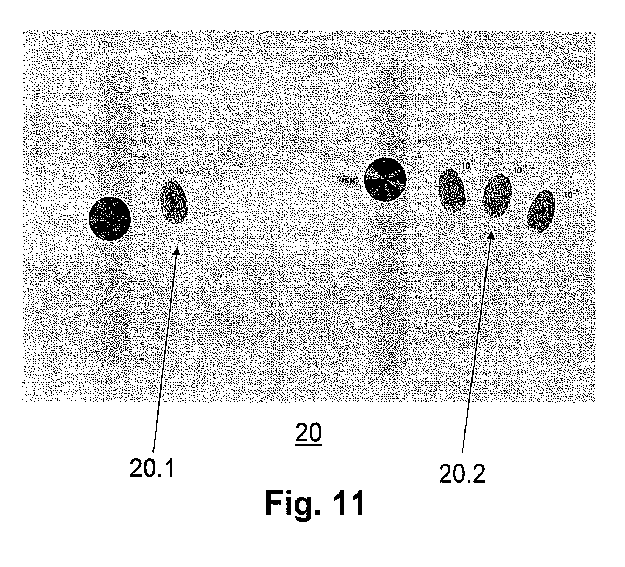

In a variant, the touch-screen control module 11.2 is configured to provide for a physical unit input tool 20, which is activated when there is a need that a user inputs a certain number representing actual physical units. Since these units can differ over several orders of magnitude it can be difficult to use just standard touch-screen controls. In Figure 11, a two-hand physical unit input tool 20 is schematically shown, which is designed to allow fast input of arbitrary physical units over several orders of magnitude. The actual number value is controlled with one hand 20.1 through e.g. e slider control. The other hand 20.2 is used to indicate the order of magnitude (e.g. this is nm, um or mm). It is possible to encode the magnitude either by number of fingers (two hand control) or by the distance of the finger to the slider (single hand control).

In the following, exemplary usage scenarios of the SPM system 1 as described above are presented.

In a variant, a sample preparation for a SPM analysis or manipulation is required. Prior to SPM analysis or SPM manipulation, the sample 3 is placed on a carrier, which then is mounted on the sample stage 2, which is an XY stage having sample motion stages 4 for moving the sample stage 2 in x-direction and y-direction.

In a variant, a preparation of the sample 3 on a carrier is required. In a variant, the sample 3 is brought on the carrier in vacuum, in air, or in liquid phase. In an embodiment, the sample 3 includes one or more macroscopically visible objects, i.e. all kind of materials and shapes. In an embodiment, the sample 3 includes one or more microscopic objects, such as microfabricated objects, beads, nanoparticles etc. In an embodiment, the sample 3 includes biological cells, such as mammalian cells, yeast, bacteria, or tissue samples, such as biopsies, engineered tissue etc.

In a variant, the mounting of the carrier containing the sample 3 is required. The carrier with the sample 3 is mounted on a sample stage 2, which is also called XY stage, for positioning the sample 3 in XY relative to the SPM probe 5. In a variant, the sample stage 2 also has the possibility to move the carrier with the sample 3 in z-direction, which is of advantage in case the z range of the SPM probe 5 is not sufficient to analyze or modify the sample 3. In an embodiment, the sample stage 2 is mounted on an optical device, such as an optical microscope, an interferometer, a stereomicroscope, etc. In a variant, the sample stage 2 is mounted standalone without optical feedback.

In a variant, the SPM probe 5 is approached to the sample 3 so that the SPM probe 5 is not yet in contact with the sample 3 on the carrier, for example at distance > 100 µm. The SPM probe 5 is arranged independently of the sample stage 2. In a variant, the SPM probe 5 is moved on its own XY stage, which is operated manually or motorized, for centering the SPM probe 5 into the center of the optical pathway of an optical device, in particular in the field of view of the image acquisition device 8.

In a variant, SPM touch-screen control for sample analysis or manipulation is required. In an embodiment, approaching the SPM probe 5 close to the sample 3 is required. If the sample stage 2 is arranged on an optical microscope with motorized lens or objective holder, the lens or objective with the smallest magnification is used to focus the sample 3 to get the z position of the sample 3. Then the focal plane is changed to the SPM probe 5, which is above the sample 3, using the zooming tool on the touchscreen to get the z position of the SPM probe 5. The z position difference equals to the SPM probe 5 height above the sample 3, which can be used to estimate an approach speed and other parameters of the SPM probe 5 to the sample 3. In a variant, this process is performed automatically using autofocus routines.

The SPM probe 5 can be approached to the sample 3 either by using one or more motorized legs of the probe motion stages 6 of the SPM system 1, or by approaching the sample 3 if the z-stage of the sample stage 2 is motorized.

If there is no optical device available, the SPM probe 5 can be approached to the sample 3 until the SPM probe 5 touches, feels or is in interaction with the sample 3 (cantilever deflection in contact mode, amplitude changes in dynamic mode tunnel currents, ionic currents, magnetic flux, surface interactions, etc.).

For scanning or manipulation of the sample 3, the SPM probe 5 is controlled in a variant based on the optical focus information, i.e. z position. In a variant, for more precise height information, the SPM probe 5 is brought into contact with the surface of the sample 3. The difference in the precision of the height information is only based on the currently different technical solutions of moving the sample 3 and the SPM probe 5.

In a variant, selecting an area of interest is required, in particular to perform a SPM scan or a topography scan. In a variant, the optical feedback displayed on the touch-screen 12 is presented in a form in which important details of the observed object are not shown due to limitations in resolution of the active feedback mechanism (or not at all if not coupled with an optical microscope). In a variant, the user or operator of the SPM system 1 is provided with the zooming tool to choose an area within the optical feedback which is to be scanned with the SPM probe 5. The resulting surface information from the SPM scan provides a higher resolution than the one provided by the optical feedback. In a variant, the area selected by the user or operator is therefore replaced in-place with the results gathered from the SPM scan, in order to provide a higher level of detail. To achieve a seamless transition between the information of the primary optical feedback mechanism, such as from the image acquisition device 8, and the SPM scan results, the results of the SPM scan are scaled to match the size of the originally selected area.

The high resolution SPM scan overlay can also be transformed into a tag 19.1, 19.2, 19.3 by using the tagging tool 19. The user can toggle freely between the different representation forms.

In a variant, selecting a microscopic object of interest is required. The touch screen presents the optical feedback of a sample or substrate either from the optical device or SPM scans scanned by the SPM probe 5. To perform operations on a specific item on the sample 3 or substrate, the exact position of such an item within the optical feedback must be selected. To compensate for inaccuracies of a touch-screen based selection mechanism with a finger, in which the user or operator simply selects the coordinate of the item of interest by touching the respective point on the touch-screen with his finger, a software-aided selection process is provided. A graphical control suited for position designation, such as an aiming tool 14, is drawn over the optical feedback, wherein the graphical control, i.e. the aiming tool, can be moved with touch gestures inside the range of the optical feedback. Once the operator moved the graphical control to a place such that it points to the item of interest, he signals to the system that an item has been chosen and that further processing can be performed. The position of the selection by the graphical control can be computed by applying the ratio of the optical feedback's size with the operator's selection to the substrate dimension while taking the magnification of the optical feedback into account.

In a variant, touch control with a normal SPM probe 5 is required. In a variant, forward force spectroscopy is required. Forward force spectroscopy is used to measure elastic moduli of a microscopic object or from a sample surface. The aiming tool is used within the optical feedback to select a microscopic object or area of interest. Depending on the distance of the SPM probe 5 to the microscopic object, either the SPM probe 5 is moving in XY over the microscopic object or the sample stage 2 is moving the sample 3 on the carrier into the reach of the SPM probe 5. The SPM probe 5 approaches then object in z-direction, or the z stage moves towards the SPM probe 5. As soon as the SPM probe 5 is approached, the deflection of the cantilever is measured while further moving the SPM probe 5 closer to the sample until a certain deflection, in particular a maximal selected force is applied, of the SPM probe 5 is detected. With the recorded force distance curve, the elastic module of the microscopic object or the sample surface can be calculated.

In a variant, backward force spectroscopy is required. Backward force spectroscopy is used to measure an adhesion force between microscopic objects on the sample surface, between the cantilever and the sample, or between the sample and the carrier surface. The aiming tool 14 is used within the optical feedback to select a microscopic object or area of interest. Depending on the distance of the SPM probe 5 to the microscopic object or sample, either the SPM probe 5 is moving in XY over the sample or microscopic object or the sample stage 2 is moving the sample 3 on the carrier into the reach of the SPM probe 5. The SPM probe 5 approaches then the sample or microscopic object in z-direction, or the sample stage 2 moves in z-direction towards the SPM probe 5. As soon as the SPM probe 5 has approached, i.e. until a certain force is applied, it remains for a certain time keeping the force control on, so that the adhesion between cantilever and sample or microscopic object surface has time to develop. Then the SPM probe 5 is retracted and the deflection is recorded. With the recorded force distance curve the adhesion force between microscopic objects on the sample surface, between the cantilever and the sample, or between the sample and the carrier surface can be calculated.

In a variant, touch control of hollow cantilevers is required. In an embodiment pick and place with hollow cantilevers is required. The pick and place tool is used to transfer a microscopic object from one place to another, which is described, for example, in WO 2011/103691. The aiming tool 14 is used within the optical feedback to select a microscopic object. Depending on the distance of the SPM probe 5 to the microscopic object, either the SPM probe 5 is moved in XY over the sample 3 or microscopic object or the sample stage 2 respectively the sample stage 2 is moved such that the sample 3 on the carrier comes into the reach of the SPM probe 5. The SPM probe 5 approaches then object in z-direction , or the sample stage is moved towards the SPM probe in z-direction, and as soon as the SPM probe 5 has approached the surface, pressure inside the hollow cantilever is reduced or decreased using the pressure controller 10, whereby the cantilever holds the object like a suction cup and picks it up from the surface by moving the SPM probe in z-direction away from the sample carrier, or the sample stage 2 is moved away from the SPM probe in z-direction. The aiming tool 14 can now be used on the touch-screen 12 to select a target point where to place the microscopic object. Depending on the distance, either the SPM probe 5 is moved in XY direction or the sample stage 2 is moved to the selected target position on the carrier, or outside the carrier e.g. to the aspiration nozzle or sample carrier of an analyzing device such as a. mass spectrometer, a MALDI-TOF, a spectrometer, a single cell PCR. The SPM probe 5 approaches the surface and as soon as approached, the pressure inside the SPM probe 5 is increased using the pressure controller 10 to release and place the microscopic object.

Microscopic samples can also be picked up, if they are not adhered to a surface but are suspended in liquid. And the object can also be released somewhere in the liquid without touching the surface before.

The samples can also be picked up automatically by using picture recognition algorithms.

In a variant, the picked object is used for forward or backward spectroscopy with a microscopic object or sample surface within the area of interest, and then be released. For example, surface modified polystyrene beads can be picked up to measure surface/surface interactions, cell indentations, cell/bead interactions. In a variant, a cell can be picked up to measure cell/cell interactions or cell/surface interactions.

In a variant, forward force spectroscopy with hollow cantilevers is required. The picked object/sample can also be used to do forward spectroscopy on another sample using the aiming tool. The force distance curve or already calculated result can be overlaid at the corresponding sample position or can also be hidden by using the tagging tool. The user can toggle freely between the different representation forms.

In a variant, backward force spectroscopy with hollow cantilevers is required. The picked object/sample can also be used to do forward spectroscopy on another sample using the aiming tool. The force distance curve or already calculated result can be overlaid at the corresponding sample position or can also be hidden by using the tagging tool. The user can toggle freely between the different representation forms.

In a variant, injection is required. Liquid can be injected from e.g. cells using the injection tool 16. The injection tool 16 can be used similar to the aiming tool 14, with the difference that the user can select the amount of liquid to be injected.

In a variant, extraction is required. Liquid can be extracted from e.g. cells using the extraction tool. The extraction tool can be used similar to the aiming tool with the difference that the user can select the amount of liquid to be extracted. The extracted liquid can then be used to inject into e.g. another cell or into a carrier e.g. aspiration nozzle or sample carrier of an analyzing device e.g. mass spectrometer, MALDI-TOF, spectrometer, single cell PCR.

### REFERENCE SIGNS

- 1: scanning probe microscopy (SPM) system
- 2: sample stage
- 3: sample
- 4: sample motion stages
- 5: SPM probe
- 6: probe motion stages
- 7: SPM feedback acquisition device
- 8: image acquisition device
- 9: light source
- 10: pressure controller
- 11: system controller
- 11.1: image acquisition module
- 11.2: touch-screen control module
- 11.3: control module
- 12: touch-screen
- 14: aiming tool
- 14.1: crosshair of aiming tool
- 14.2: dedicated area of aiming tool
- 15: scan tool
- 15.1: scan area of scan tool
- 15.2: dedicated area of scan tool
- 15.3: time indicator
- 16: injection tool
- 16.1: dedicated area of injection tool
- 16.2: volume indicator of injection tool
- 17: zoom gesture
- 18: focus gesture
- 19: tagging tool
- 19.1, 19.2, 19.3: tags of tagging tool
- 20: physical unit input tool
- 20.1: one hand controlling physical unit input tool
- 20.2: other hand controlling physical unit input tool

## Claims

1. A scanning probe microscopy (SPM) system (1), the SPM system (1) comprising a sample stage (2) and one or more sample motion stages (4) for actuating the sample stage (2), the SPM system (1) comprising a SPM probe (5) and one or more probe motion stages (6) for actuating the SPM probe (5) and for performing an SPM scan of a sample (3) arranged on the sample stage (2), and the SPM system (1) comprising a system controller (11), wherein the system controller (11) includes:
an image acquisition module (11.1) configured to collect from an image acquisition device (8) one or more images of the sample (3) carried by the sample stage (2),
a touch-screen control module (11.2) configured to display the one or more images of the sample (2) together with one or more tools (14, 15, ...) on a touch-screen (12) and to generate one or more control actions depending on the detection of a gesture of a user touching the touch-screen (12), and
a control module (11.3) configured to receive one or more control actions generated by the touch-screen control module (11.2) and to control the SPM system (1) according to the received control actions.

2. The SPM system according to claim 1, wherein the one or more tools (14, 15, ...) are displayed on the touch-screen (12) as.an overlay image on the one or more images of the sample (2).

3. The SPM system according to claim 1 or 2, wherein at least one of the one or more tools (14, 15, ...) displayed on the touch-screen (12) includes a dedicated area (14.1, 15.1, ...) configured to be touched and dragged by a user.

4. The SPM system according to one of claims 1 to 3, wherein at least one of the one or more tools (14, 15, ..) displayed on the touch-screen (12) includes a crosshair (14.2) configured to define a target location on the sample (3).

5. The SPM system according to one of claims 1 to 4, wherein at least one of the one or more tools (14, 15, ..) displayed on the touch-screen (12) includes a scan area (15.2) configured to define a SPM scan area on the sample (3).

6. The SPM system according to one of claims 1 to 5, wherein at least one of the one or more tools (14, 15, ...) displayed on the touch-screen (12) includes a volume indicator (16.2) configured to define a volume of a liquid to be applied to the sample (3) and/or to be withdrawn from the sample (3).

7. The SPM system according to one of claims 1 to 6, wherein at least one of the one or more tools (14, 15, ...) displayed on the touch-screen (12) are configured to define at least a first location and a second location on the sample (3), on another sample or on another item such as an analysis device, in particular together with a trajectory between the first location and the second location.

8. The SPM system according to one of claims 1 to 7, wherein at least one of the one or more tools (14, 15, ...) displayed on the touch-screen (12) includes visual tags (19.1, 9.2. 19.3) configured to display specific locations of the sample (3) together with specific information.

9. The SPM system according to one of claims 1 to 8, wherein the control actions define on or more of the following: actuating the sample motion stages (4) such that images of a different area of the sample are collected by the image acquisition module (11.2), actuating the probe motion stages such that the SPM probe is brought into connection with the sample (3) and/or that the SPM probe is taken away from the sample (3), actuating the probe motion stages such that an SPM scan of an area of the sample (3) is performed, actuating a pressure controller (10) connected with a hollow SPM probe (5) to pick up from the sample (3) and/or to drop an object on the sample (3), on another sample, or on another item such as an analysis device, in particular between a first location and a second location, actuating a pressure controller (10) connected with a hollow SPM probe (5) to inject a specified volume of a liquid on the sample (3) and/or to extract a specified volume of a liquid from the sample (3).

10. A method of controlling a SPM system (1), the SPM system (1) comprising a sample stage (2) and one or more sample motion stages (4) for actuating the sample stage (2), the SPM system (1) comprising a SPM probe (5) and one or more probe motion stages (6) for actuating the SPM probe (5) and for performing an SPM scan of a sample (3) arranged on the sample stage (2), the method comprising:
collecting from an image acquisition device (8) one or more images of the sample (3) carried by the sample stage (2),
displaying the one or more images of the sample (2) together with one or more tools (14, 15, ...) on a touch-screen (12) and generating one or more control actions depending on the detection of a gesture of a user touching the touch-screen (12), and
controlling the SPM system (1) according to the generated control actions.

11. The method according to claim 10, wherein the one or more tools (14, 15, ...) are displayed on the touch-screen (12) as an overlay image of the one or more images of the sample (2).

12. The method according to claim 10 or 11, wherein a tool (14, 15, ...) displayed on the touch-screen (12) includes a dedicated area (14.1, 15.1, ...) configured to be touched and dragged by a user.

13. The method according to one of claims 10 to 12, wherein a tool (14, 15, ...) displayed on the touch-screen (12) includes one or more of: a crosshair (14.2) configured to define a target location on the sample (3), a scan area (15.2) configured to define a SPM scan area on the sample (3), a volume indicator (16.2) configured to define a volume of a liquid to be applied to the sample (3) and/or to be withdrawn from the sample (3), and visual tags (19.1, 9.2, 19.3) configured to display specific locations of the sample (3) together with specific information.

14. The method according to one of claims 10 to 13, wherein control actions define on or more of the following: actuating the sample motion stages (4) such that images of a different area of the sample are collected by the image acquisition module (11.2), actuating the probe motion stages such that the SPM probe is brought into connection with the sample (3) and/or that the SPM probe is taken away from the sample (3), actuating the probe motion stages such that an SPM scan of an area of the sample (3) is performed, actuating a pressure controller (10) connected with a hollow SPM probe (5) to pick up from the sample (3) and/or to drop an object on the sample (3), on another sample, or on another item such as an analysis device, in particular between a first location and a second location, actuating a pressure controller (10) connected with a hollow SPM probe (5) to inject a specified volume of a liquid on the sample (3) and/or to extract a specified volume of a liquid from the sample (3).

15. Computer program product comprising computer program code means for controlling one or more processors of a system controller (11) of a scanning probe microscopy (SPM) system (1), the computer program product configured to direct the system controller (11) to:
collect from an image acquisition device (8) one or more images of the sample (3) carried by the sample stage (2),
display the one or more images of the sample (2) together with one or more tools (14, 15, ...) on a touch-screen (12) and generating one or more control actions depending on the detection of a gesture of a user touching the touch-screen (12), and
control the SPM system (1) according to the generated control actions.
